# EUROPEAN PATENT APPLICATION

(11) **EP 4 514 055 A1**
(43) Date of publication of application: **26.02.2025**
(21) Application number: 23790979.1
(22) Date of filing: 23.03.2023
(51) Int. Cl.: H04W 76/18

(54) **RADIO LINK MANAGEMENT METHOD AND APPARATUS, AND TERMINAL DEVICE**

(30) Priority: 20.04.2022 CN 202210420781
(71) Applicant: Datang Mobile Communications Equipment Co., Ltd., Beijing 100085 (CN)
(72) Inventor: ZHAO, Yali, Beijing 100085 (CN)
(74) Representative: Studio Torta S.p.A.
(86) International application number: PCT/CN2023/083359
(87) International publication number: WO 2023/202319

(57) **Abstract**

A method and a device for radio link management, and a user equipment are provided. The method includes: in a case that a radio link failure occurs in a first link on a first indirect path of the user equipment, determining that a radio link failure occurs to the user equipment in the first indirect path; where the first link includes at least one of following: a Uu link between a first relay user equipment and a network device; a sidelink between a remote user equipment and the first relay user equipment; a sidelink between the remote user equipment and a second relay user equipment; a sidelink between two second relay user equipments; or, a sidelink between the second relay user equipment and the first relay user equipment.

## Description

### CROSS-REFERENCE TO RELATED APPLICATION

This application claims a priority to Chinese Patent Application No. 202210420781.4 filed on April 20, 2022, which is incorporated in its entirety by reference herein.

### TECHNICAL FIELD

The present disclosure relates to the field of communication technology, and in particular to a method for radio link management, a device for radio link management and a user equipment.

### BACKGROUND

To extend network coverage, one solution is to introduce a relay. The relay may be a user equipment with a relay function. For a UE-to-network relay user equipment (UE-to-Network Relay UE, referred to as U2N relay UE in the present application), a Uu interface is adopted as an interface between the relay user equipment and the network, and a direct communication interface is adopted as an interface between the relay user equipment and a relayed user equipment (referred to as a remote user equipment, remote UE).

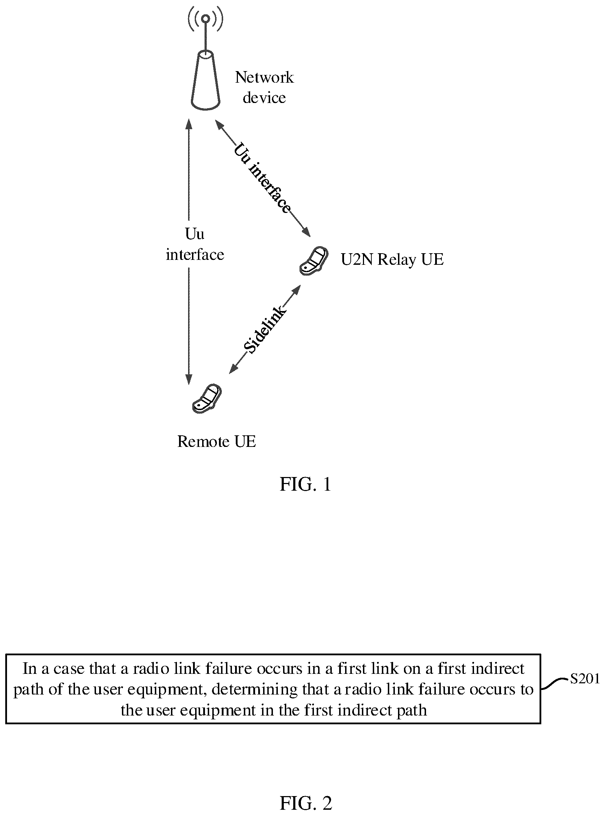

After the U2N relay is introduced, in order to improve the peak rate and throughput of the remote user equipment, the introduction of a multi-path transmission mechanism will be considered, which includes: a direct path, i.e., a transmission path used when the user equipment is directly connected to the network device through a Uu interface; and an indirect path, i.e., a transmission path used when the user equipment is connected to the network device through a U2N relay. That is, the multi-path transmission mechanism enables the remote user equipment to access the network device through the Uu interface and the U2N relay at the same time. The multi-path transmission mechanism is shown in FIG. 1.

In the related technologies, in a case that the remote user equipment supports multi-path transmission, there is no clear implementation method for managing a radio link of the indirect path.

### SUMMARY

The embodiments of the present disclosure provide a method for radio link management, a device for radio link management and a user equipment, to achieve management of a radio link of an indirect path by a remote user equipment.

In order to solve the above technical problem, the embodiments of the present disclosure provide a method for radio link management, performed by a user equipment, including:
in a case that a radio link failure occurs in a first link on a first indirect path of the user equipment, determining that a radio link failure occurs to the user equipment in the first indirect path;
the first link includes at least one of following:
   a Uu link between a first relay user equipment and a network device;
   a sidelink between a remote user equipment and the first relay user equipment;
   a sidelink between the remote user equipment and a second relay user equipment;
   a sidelink between two second relay user equipments; or,
   a sidelink between the second relay user equipment and the first relay user equipment;
   the first relay user equipment is a UE-to-network relay user equipment, and the second relay user equipment is a UE-to-UE relay user equipment.

Optionally, in a case that the first link includes at least one of: the Uu link between the first relay user equipment and the network device, the sidelink between the two second relay user equipments, or the sidelink between the second relay user equipment and the first relay user equipment, before the determining that the radio link failure occurs to the user equipment in the first indirect path, the method further includes:
receiving first indication information transmitted by a relay user equipment, where the first indication information is used to indicate that the radio link failure occurs in the first link.

Optionally, after the determining that the radio link failure occurs to the user equipment in the first indirect path, the method further includes at least one of following:
in a case that radio link failures occur in all first paths in a first cell group to which the first indirect path belongs, determining that a radio link failure occurs to the user equipment in the first cell group, where the first paths includes at least one of a direct path or second indirect paths, and the first indirect path is one of the second indirect paths; or,
in a case that no radio link failure occurs in at least one second path in a second cell group aggregated by the user equipment, transmitting indirect path radio link failure indication information to the network device through the second path where no radio link failure occurs, where the second path includes a direct path or a third indirect path, and the second cell group is any cell group among all cell groups aggregated by the user equipment.

Optionally, the indirect path radio link failure indication information carries identification information of the first indirect path.

Optionally, the identification information includes at least one of following:
path identification information of the first indirect path;
an identifier of a cell to which the first indirect path belongs and path identification information in the cell; or,
an identifier of a cell to which the first indirect path belongs, an identifier of a relay user equipment and an identifier of the user equipment.

Optionally, after the determining that the radio link failure occurs to the user equipment in the first cell group, the method further includes at least one of following:
in a case that the first cell group to which the first indirect path belongs is a first secondary cell group and no radio link failure occurs in at least one third path in a second cell group, transmitting, to the network device through the third path where no radio link failure occurs, second indication information indicating a first secondary cell group radio link failure, where the second cell group includes: at least one of a master cell group or other secondary cell group except the first secondary cell group, and the third path includes a direct path or a fourth indirect path; or,
in a case that the first cell group to which the indirect path belongs is a master cell group and no radio link failure occurs in at least one fourth path in a secondary cell group, transmitting, to the network device through the fourth path where no radio link failure occurs, third indication information indicating a master cell group radio link failure, where the fourth path includes a direct path or a fifth indirect path.

Optionally, the second indication information carries identification information of the first secondary cell group.

Optionally, the method further includes:
receiving fourth indication information transmitted by the network device, where the fourth indication information is used to trigger the user equipment to perform discovery and/or reselection of a target object;
the target object includes: a relay user equipment and/or a cell.

Optionally, after the determining that the radio link failure occurs to the user equipment in the first indirect path, the method further includes:
performing discovery and/or reselection of a target object;
the target object includes: a relay user equipment and/or a cell.

The embodiments of the present disclosure further provide a user equipment, including a memory, a transceiver, and a processor;
the memory is configured to store a computer program, the transceiver is configured to transmit and receive data under control of the processor, and the processor is configured to read the computer program in the memory to perform following operation:
in a case that a radio link failure occurs in a first link on a first indirect path of the user equipment, determining that a radio link failure occurs to the user equipment in the first indirect path;
the first link includes at least one of following:
   a Uu link between a first relay user equipment and a network device;
   a sidelink between a remote user equipment and the first relay user equipment;
   a sidelink between the remote user equipment and a second relay user equipment;
   a sidelink between two second relay user equipments; or,
   a sidelink between the second relay user equipment and the first relay user equipment;
   the first relay user equipment is a UE-to-network relay user equipment, and the second relay user equipment is a UE-to-UE relay user equipment.

Optionally, in a case that the first link includes at least one of: the Uu link between the first relay user equipment and the network device, the sidelink between the two second relay user equipments, or the sidelink between the second relay user equipment and the first relay user equipment, the processor is configured to read the computer program in the memory to further perform following operation:
receiving, via the transceiver, first indication information transmitted by a relay user equipment, where the first indication information is used to indicate that the radio link failure occurs in the first link.

Optionally, the processor is configured to read the computer program in the memory to further perform at least one of following operations:
in a case that radio link failures occur in all first paths in a first cell group to which the first indirect path belongs, determining that a radio link failure occurs to the user equipment in the first cell group, where the first paths includes at least one of a direct path or second indirect paths, and the first indirect path is one of the second indirect paths; or,
in a case that no radio link failure occurs in at least one second path in a second cell group aggregated by the user equipment, transmitting indirect path radio link failure indication information to the network device through the second path where no radio link failure occurs, where the second path includes a direct path or a third indirect path, and the second cell group is any cell group among all cell groups aggregated by the user equipment.

Optionally, the indirect path radio link failure indication information carries identification information of the first indirect path.

Optionally, the identification information includes at least one of following:
path identification information of the first indirect path;
an identifier of a cell to which the first indirect path belongs and path identification information in the cell; or,
an identifier of a cell to which the first indirect path belongs, an identifier of a relay user equipment and an identifier of the user equipment.

Optionally, the processor is configured to read the computer program in the memory to further perform at least one of following operations:
in a case that the first cell group to which the first indirect path belongs is a first secondary cell group and no radio link failure occurs in at least one third path in a second cell group, transmitting, to the network device through the third path where no radio link failure occurs, second indication information indicating a first secondary cell group radio link failure, where the second cell group includes: at least one of a master cell group or other secondary cell group except the first secondary cell group, and the third path includes a direct path or a fourth indirect path; or,
in a case that the first cell group to which the indirect path belongs is a master cell group and no radio link failure occurs in at least one fourth path in a secondary cell group, transmitting, to the network device through the fourth path where no radio link failure occurs, third indication information indicating a master cell group radio link failure, where the fourth path includes a direct path or a fifth indirect path.

Optionally, the second indication information carries identification information of the first secondary cell group.

Optionally, the processor is configured to read the computer program in the memory to further perform following operation:
receiving, via the transceiver, fourth indication information transmitted by the network device, where the fourth indication information is used to trigger the user equipment to perform discovery and/or reselection of a target object;
the target object includes: a relay user equipment and/or a cell.

Optionally, the processor is configured to read the computer program in the memory to further perform following operation:
performing discovery and/or reselection of a target object;
the target object includes: a relay user equipment and/or a cell.

The embodiments of the present disclosure further provide a device for radio link management, applied to a user equipment, including:
a first determination unit, configured to: in a case that a radio link failure occurs in a first link on a first indirect path of the user equipment, determine that a radio link failure occurs to the user equipment in the first indirect path;
the first link includes at least one of following:
   a Uu link between a first relay user equipment and a network device;
   a sidelink between a remote user equipment and the first relay user equipment;
   a sidelink between the remote user equipment and a second relay user equipment;
   a sidelink between two second relay user equipments; or,
   a sidelink between the second relay user equipment and the first relay user equipment;
   the first relay user equipment is a UE-to-network relay user equipment, and the second relay user equipment is a UE-to-UE relay user equipment.

The embodiments of the present disclosure provide a processor readable storage medium, having a computer program stored thereon, and the computer program is configured to cause a processor to perform the method described above.

The beneficial effects of the present disclosure are as follows.

In the above solutions, by defining the occurrence of radio link failure in the indirect path, the remote user equipment is enabled to timely understand a link state of each link on the indirect path, which achieves management of the radio link of the indirect path by the remote user equipment.

### BRIEF DESCRIPTION OF THE DRAWINGS

To better clarify technical solutions of embodiments of the present disclosure or in the related technologies, drawings used in descriptions of the embodiments or in the related technologies are briefly introduced hereinafter. Apparently, the described drawings merely illustrate some embodiments of the present disclosure. A person ordinary skilled in the art can obtain other drawings based on these drawings without any creative efforts.
FIG. 1 is a schematic diagram of a multi-path transmission mechanism of a remote user equipment;
FIG. 2 is a flow chart of a method for radio link management according to embodiments of the present disclosure;
FIG. 3 is a first detailed flow chart of a specific application of embodiments of the present disclosure;
FIG. 4 is a second detailed flow chart of a specific application of embodiments of the present disclosure;
FIG. 5 is a third detailed flow chart of a specific application of embodiments of the present disclosure;
FIG. 6 is a schematic diagram of a unit of a device for radio link management according to embodiments of the present disclosure; and
FIG. 7 is a structural diagram of a user equipment according to embodiments of the present application.

### DETAILED DESCRIPTION

The technical solutions in embodiments of the present disclosure are described clearly and completely in conjunction with drawings in the embodiments of the present disclosure. Apparently, the described embodiments are merely a part of rather than all the embodiments of the present disclosure. All other embodiments obtained by a person ordinary skilled in the art based on the embodiments of the present disclosure without any creative efforts fall within the protection scope of the present disclosure.

Terms such as "first" and "second" in the specification and the claims of the present disclosure are used to distinguish similar objects and are not necessarily used to describe a specific order or sequence. It should be understood that the terms used in this way may be interchanged under appropriate circumstances, so that the embodiments of the present disclosure described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device.

The term "and/or" in the embodiments of the present disclosure describes an association relationship of associated objects, which indicates that there may be three types of relationships. For example, A and/or B may represent three situations: only A being included, both A and B being included, only B being included. The character "/" generally indicates that there is an "or" relationship between associated objects in front of it and behind it. The term "multiple" in the embodiments of the present disclosure refers to two or more than two, and other words for expressing quantities are similar to it.

In embodiments of the present disclosure, the expressions such as "exemplary" or "for example" are used to indicate an example, illustration, or description. Any embodiment or design solution described as "exemplary" or "for example" in the embodiments of the present disclosure should not be construed as being preferred or advantageous over other embodiments or design solutions. Rather, the use of the expressions such as "exemplary" or "for example" is intended to present the relevant concepts in a specific manner.

Embodiments of the present disclosure are described hereinafter in connection with the drawings. The method for radio link management, the device for radio link management and the user equipment provided in the embodiments of the present application may be applied to a radio communication system. The radio communication system may be a system employing a fifth generation (5th Generation, 5G) mobile communication technology (hereinafter referred to as a 5G system), and it can be understood by those skilled in the art that the 5G NR system is only an example and is not a limitation.

The embodiments of the present application provide a method for radio link management, a device for radio link management and a user equipment, to achieve management of a radio link of an indirect path by a remote user equipment.

Methods and devices are based on the same application concept. Since the principles of solving problems in methods and devices are similar, for implementations of the devices and the methods, reference can be made to each other, the repetition of which is not further provided herein.

As shown in FIG. 2, the embodiments of the present disclosure provide a method for radio link management, performed by a user equipment, including the following step.

Step S201: in a case that a radio link failure occurs in a first link on a first indirect path of the user equipment, determining that a radio link failure occurs to the user equipment in the first indirect path.

It should be noted that the user equipment in the embodiments of the present application supports multi-path transmission, that is, the user equipment may access the network through a direct path and an indirect path. Optionally, the user equipment may access the network through one or more indirect paths, and the first indirect path is any one of the indirect paths for the user equipment to access the network. The user equipment in the embodiments of the present application refers to a remote user equipment.

Optionally, the first link in the embodiments of the present application includes at least one of the following.

A11, a Uu link between a first relay user equipment and a network device.

The first relay user equipment in the present application is a UE-to-network relay user equipment (U2N relay UE), that is, a type of the first relay user equipment is U2N relay.

It should be noted that, in this case, the remote user equipment accesses the network device through a relay user equipment (this relay user equipment U2N relay UE), and the failure occurs in a link from the relay user equipment to the network device.

A12, a sidelink between a remote user equipment and the first relay user equipment.

It should be noted that, in this case, the remote user equipment accesses the network device through a relay user equipment (this relay user equipment U2N relay UE), and the failure occurs in a link from the relay user equipment to the remote user equipment.

A13, a sidelink between the remote user equipment and a second relay user equipment.

The second relay user equipment in the present application is a UE-to-UE relay user equipment (U2U relay UE), that is, a type of the first relay user equipment is U2U relay.

It should be noted that, in this case, the remote user equipment accesses the network device through multiple relay user equipments, which involves one U2N relay UE and one or more (the term "more" in the present application refers to greater than or equal to 2) U2U relay UEs. In this case, the failure occurs in a link from the U2U relay UE to the remote user equipment.

A14, a sidelink between two second relay user equipments.

It should be noted that, in this case, the remote user equipment accesses the network device through multiple relay user equipments, which involves one U2N relay UE and two or more U2U relay UEs. In this case, the failure occurs in a link from a U2U relay UE to a U2U relay UE.

A15, a sidelink between the second relay user equipment and the first relay user equipment.

It should be noted that, in this case, the remote user equipment accesses the network device through multiple relay user equipments, which involves one U2N relay UE and one or more U2U relay UEs. In this case, the failure occurs in a link from a U2U relay UE to the U2N relay UE.

It should be noted that, in the embodiments of the present application, by defining the occurrence of radio link failure in the indirect path, the remote user equipment is enabled to timely understand a link state of each link on the indirect path, so as to implement subsequent processing.

Optionally, in at least one embodiment of the present application, in a case that the first link includes at least one of A11, A14 or A15, before the remote user equipment determines that that radio link failure occurs in the first indirect path, the method needs to include:
receiving first indication information transmitted by a relay user equipment, where the first indication information is used to indicate that the radio link failure occurs in the first link.

Optionally, the relay user equipment in this case refers to a relay user equipment that can communicate with the remote user equipment and directly know the link failure. For example, in a case that the remote user equipment accesses the network device through relay user equipment 1 (relay user equipment 1 belongs to U2U relay UE) and relay user equipment 2 (relay user equipment 2 belongs to U2N relay UE), when a link between relay user equipment 2 and the network device fails, relay user equipment 2 needs to transmit first indication information to the remote user equipment. Optionally, relay user equipment 2 first transmits the first indication information to relay user equipment 1, and then relay user equipment 1 forwards the first indication information to the remote user equipment.

Optionally, the relay user equipment transmits the first indication information through PC5-RRC signaling.

Optionally, in at least one embodiment of the present application, after the determining that the radio link failure occurs to the user equipment in the first indirect path, the method further includes at least one of following.

B 11: in a case that radio link failures occur in all first paths in a first cell group to which the first indirect path belongs, determining that a radio link failure occurs to the user equipment in the first cell group, where the first paths includes at least one of a direct path or second indirect paths, and the first indirect path is one of the second indirect paths.

This situation refers to that: in a case where radio link failures occur in all direct paths and indirect paths in the first cell group to which the first indirect path belongs, the remote user equipment determines that the radio link failure occurs in the first cell group.

For example, the remote user equipment accesses cell 1 through relay user equipment 1, accesses cell 2 through relay user equipment 2, and accesses cell 3 through relay user equipment 3, and cell 1, cell 2 and cell 3 belong to the same cell group; when a radio link failure occurs in an indirect path for the remote user equipment to access cell 1 through relay user equipment 1, and radio link failures also occur in an indirect path for the remote user equipment to access cell 2 through relay user equipment 2 and an indirect path for the remote user equipment to access cell 3 through relay user equipment 3, the remote user equipment determines that a radio link failure occurs in the cell group formed by cell 1, cell 2 and cell 3. For example, the remote user equipment accesses cell 1 through relay user equipment 1, accesses cell 2 through relay user equipment 2, accesses cell 3 through relay user equipment 3, and the remote user equipment also accesses cell 2 and cell 3 respectively through direct paths, and cell 1, cell 2, and cell 3 belong to the same cell group; when a radio link failure occurs in an indirect path for the remote user equipment to access cell 1 through relay user equipment 1, radio link failures occur in an indirect path for the remote user equipment to access cell 2 through relay user equipment 2 and an indirect path for the remote user equipment to access cell 3 through relay user equipment 3, and radio link failures occur in the direct paths for relay user equipment 1 to access cell 2 and cell 3 respectively, the remote user equipment determines that a radio link failure occurs in the cell group formed by cell 1, cell 2, and cell 3.

Optionally, in at least one embodiment of the present application, after the determining that the radio link failure occurs to the user equipment in the first cell group, the method further includes at least one of the following:
B111: in a case that the first cell group to which the first indirect path belongs is a first secondary cell group and no radio link failure occurs in at least one third path in a second cell group, transmitting, to the network device through the third path where no radio link failure occurs, second indication information indicating a first secondary cell group radio link failure, where the second cell group includes: at least one of a master cell group or other secondary cell group except the first secondary cell group, and the third path includes a direct path or a fourth indirect path.

This situation refers to that: in a case that the first cell group to which the first indirect path belongs is a secondary cell group (secondary cell group, SCG), and no radio link failure occurs in at least one direct path or indirect path in a master cell group (master cell group, MCG) or other SCG, it indicates that the remote user equipment can still access the network device, and the remote user equipment can transmit the second indication information to the network device through any direct path or indirect path where no radio link failure occurs.

For example, the remote user equipment accesses cell 4 through relay user equipment 4, accesses cell 5 through relay user equipment 5 and accesses cell 6 through relay user equipment 6, and cell 4, cell 5 and cell 6 belong to the same secondary cell group; the remote user equipment also accesses cell 7 through relay user equipment 7 and accesses cell 8 through relay user equipment 8, and cell 7 and cell 8 belong to the same master cell group; when a radio link failure occurs in an indirect path for the remote user equipment to access cell 4 through relay user equipment 4, and no radio link failure occurs in an indirect path for the remote user equipment to access cell 7 through relay user equipment 7 and an indirect path for the remote user equipment to access cell 8 through relay user equipment 8, the remote user equipment may transmit the second indication information through the indirect path for accessing cell 7 through relay user equipment 7 or the indirect path for accessing cell 8 through relay user equipment 8. For example, the remote user equipment accesses cell 4 through relay user equipment 4, accesses cell 5 through relay user equipment 5, and accesses cell 6 through relay user equipment 6, and cell 4, cell 5 and cell 6 belong to the same secondary cell group; the remote user equipment also accesses cell 7 through relay user equipment 7, accesses cell 8 through relay user equipment 8, and directly accesses cell 7 and cell 8, and cell 7 and cell 8 belong to the same master cell group; when a radio link failure occurs in an indirect path for the remote user equipment to access cell 4 through relay user equipment 4, and no radio link failure occurs in a direct path for the remote user equipment to access cell 7, the remote user equipment may transmit the second indication information through the direct path for accessing cell 7.

Optionally, the second indication information carries identification information of the first secondary cell group.

Optionally, in at least one embodiment of the present application, after the transmitting the second indication information to the network device, the method further includes:
receiving fourth indication information transmitted by the network device, where the fourth indication information is used to trigger the user equipment to perform discovery and/or reselection of a target object;
where the target object includes: a relay user equipment and/or a cell.

B112. in a case that the first cell group to which the indirect path belongs is a master cell group and no radio link failure occurs in at least one fourth path in a secondary cell group, transmitting, to the network device through the fourth path where no radio link failure occurs, third indication information indicating a master cell group radio link failure, where the fourth path includes a direct path or a fifth indirect path.

This situation refers to that: in a case that the first cell group to which the first indirect path belongs is an MCG, and no radio link failure occurs in at least one direct path or indirect path in other SCG, the remote user equipment may transmit the third indication information to network device through any direct path or indirect path where no radio link failure occurs.

For example, the remote user equipment accesses cell 9 through relay user equipment 9, accesses cell 10 through relay user equipment 10, and accesses cell 11 through relay user equipment 11, and cell 9, cell 10, and cell 11 belong to the same master cell group; the remote user equipment also accesses cell 12 through relay user equipment 12 and accesses cell 13 through relay user equipment 13, and cell 12 and cell 13 belong to the same secondary cell group; when a radio link failure occurs in an indirect path for relay user equipment 9 to access cell 9, and no radio link failure occurs in an indirect path for the remote user equipment to access cell 12 through relay user equipment 12 and an indirect path for the remote user equipment to access cell 13 through relay user equipment 13, the remote user equipment may transmit the third indication information through the indirect path for accessing cell 12 through relay user equipment 12 or the indirect path for accessing cell 13 through relay user equipment 13. For example, the remote user equipment accesses cell 9 through relay user equipment 9, accesses cell 10 through relay user equipment 10, and accesses cell 11 through relay user equipment 11, and cell 9, cell 10, and cell 11 belong to the same master cell group; the remote user equipment also accesses cell 12 through relay user equipment 12, accesses cell 13 through relay user equipment 13, and directly accesses cell 12 and cell 13, and cell 12 and cell 13 belong to the same secondary cell group; when a radio link failure occurs in an indirect path for relay user equipment 9 to access cell 9, and no radio link failure occurs in a direct path for the remote user equipment to access cell 12, the remote user equipment may transmit the third indication information through the direct path for accessing cell 12.

B 12: in a case that no radio link failure occurs in at least one second path in a second cell group aggregated by the user equipment, transmitting indirect path radio link failure indication information to the network device through the second path where no radio link failure occurs, where the second path includes a direct path or a third indirect path, and the second cell group is any cell group among all cell groups aggregated by the user equipment.

This situation refers to that: in a case that no radio link failure occurs in at least one direct path or indirect path in any cell group (cell group) aggregated by the remote user equipment, the remote user equipment may transmit the indirect path radio link failure indication information to the network device through any direct path or indirect path where no radio link failure occurs.

Optionally, in at least one embodiment of the present application, the indirect path radio link failure indication information carries identification information of the first indirect path.

Optionally, the identification information includes at least one of following.

C111: path identification information of the first indirect path.

For example, the path identification information may be a path serial number. Optionally, the path serial number may be a path serial number uniquely corresponding to each path and configured on a per-UE basis.

C112: an identifier of a cell to which the first indirect path belongs and path identification information in the cell.

For example, the identifier of the cell is a cell index (e.g., a cell serial number (identity, ID)). Optionally, the path identification may be configured on a per-cell basis, and the path identification is unique in the cell.

C113: an identifier of a cell to which the first indirect path belongs, an identifier of a relay user equipment and an identifier of the user equipment.

Optionally, the identifier of the user equipment may be a target address identifier of layer 2 (L2), or may be a local remote user equipment identifier assigned by the network device.

Optionally, in at least one embodiment of the present application, after the transmitting the indirect path radio link failure indication information to the network device, the method further includes:
receiving fourth indication information transmitted by the network device, where the fourth indication information is used to trigger the user equipment to perform discovery and/or reselection of a target object;
where the target object includes: a relay user equipment and/or a cell.

Optionally, in at least one embodiment of the present application, after the determining that the radio link failure occurs to the user equipment in the first indirect path, the method further includes:
performing discovery and/or reselection of a target object;
where the target object includes: a relay user equipment and/or a cell.

Optionally, in at least one embodiment of the present application, after the remote user equipment performs the discovery and/or the reselection of the target object, a radio resource control (Radio Resource Control, RRC) connection reestablishment may be performed through the target object, so as to recover the radio link.

Examples of specific application scenarios of at least one embodiment of the present application are described hereinafter.

Specific application scenario 1: a radio link failure occurs in an indirect path

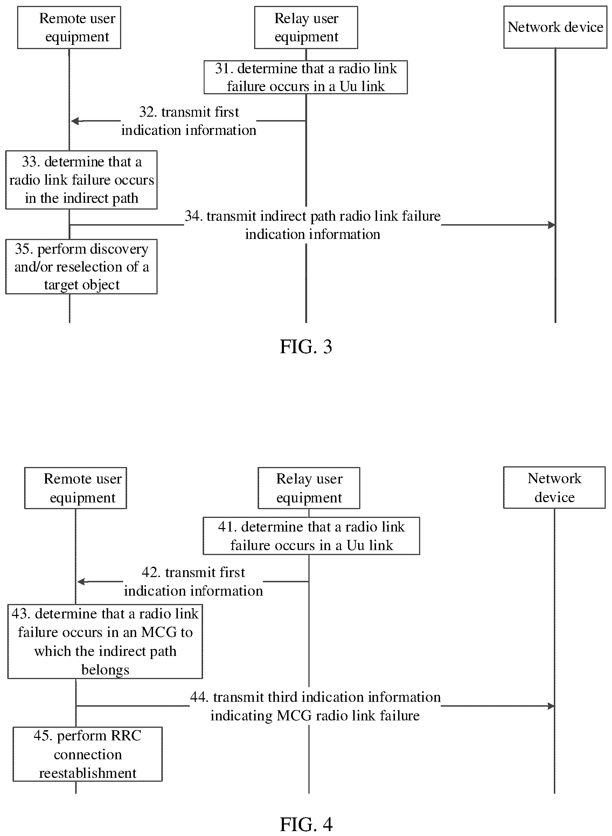

For the specific implementation process, reference may be made to FIG. 3.

Step 31: the relay user equipment determines that a radio link failure occurs in a Uu link.

The criteria for the relay user equipment to determine the radio link failure of the Uu link is as follows. As long as any of the following conditions is met, it is determined that a radio link failure occurs in the Uu interface between the relay user equipment and the network device:
D11, PCell T310 timeout occurs;
D12, PCell T312 timeout occurs;
D13. in a case that T300, T301, T304, T311 and T319 are not running, a media access control (Media Access Control, MAC) entity of the MCG indicates a random access problem to the RRC; or,
D14. a radio link control (Radio Link Control, RLC) layer of the MCG reaches the maximum quantity of retransmissions.

Step 32: the relay user equipment transmits first indication information to the remote user equipment, to indicate that a radio link failure occurs in its Uu link.

For example, when the radio link failure occurs in the Uu link of the relay user equipment, the first indication information transmitted to the remote user equipment needs to be indicated to the remote user equipment via signaling (such as PC5-RRC signaling).

Step 33: the remote user equipment determines that a radio link failure occurs in the indirect path.

For the remote user equipment supporting multi-path transmission, when a radio link failure occurs in a specific link on an indirect path, the remote user equipment determines that a radio link failure occurs to it in the indirect path.

For this application scenario, the specific link may refer to a Uu link between the U2N relay UE and the network device.

Step 34: the remote user equipment transmits indirect path radio link failure indication information to the network device.

Optionally, in a case that no radio link failure occurs in at least one direct path or indirect path in any cell group (which may be an MCG and/or an SCG) aggregated by the remote user equipment, the remote user equipment may transmit indirect path radio link failure indication information to the network device through any direct path or indirect path where no radio link failure occurs.

Step 35: the remote user equipment performs discovery and/or reselection of a target object.

The network device receives the indirect path radio link failure indication information from the remote user equipment, and may also transmit fourth indication information to the remote user equipment, to trigger the remote user equipment to perform discovery and/or reselection of the target object, where the target object may be a relay user equipment and/or a cell.

Or, in a case that the remote user equipment determines that a radio link failure occurs to it in an indirect path, a process of performing discovery and/or reselection of a target object is directly triggered, where the target object may be a remote user equipment and/or a cell.

Specific application scenario 2: a radio link failure occurs in an MCG

For the specific implementation process, reference may be made to FIG. 4.

Step 41: the relay user equipment determines that a radio link failure occurs in a Uu link.

The criteria for the relay user equipment to determine the radio link failure of the Uu link is as follows. As long as any of the following conditions is met, it is determined that a radio link failure occurs in the Uu interface between the relay user equipment and the network device:
E11, PCell T310 timeout occurs;
E12, PCell T312 timeout occurs;
E13. in a case that T300, T301, T304, T311 and T319 are not running, a media access control (Media Access Control, MAC) entity of the MCG indicates a random access problem to the RRC; or,
E14, a radio link control (Radio Link Control, RLC) layer of the MCG reaches the maximum quantity of retransmissions.

Step 42: the relay user equipment transmits first indication information to the remote user equipment, to indicate that a radio link failure occurs in its Uu link.

For example, when the radio link failure occurs in the Uu link of the relay user equipment, the first indication information transmitted to the remote user equipment needs to be indicated to the remote user equipment via signaling (such as PC5-RRC signaling).

Step 43: the remote user equipment determines that a radio link failure occurs in an MCG to which the indirect path belongs.

For the remote user equipment supporting multi-path transmission, when a radio link failure occurs in a specific link on an indirect path, the remote user equipment determines that a radio link failure occurs to it in the indirect path.

For this application scenario, the specific link refers to a Uu link between the U2N relay UE and the network device.

Further, in a case that the cell group to which the indirect path belongs is an MCG, it is determined that a radio link failure occurs in the MCG to which the indirect path belongs.

Step 44: the remote user equipment transmits third indication information indicating MCG radio link failure to the network device.

It should be noted that this step is optional.

In a case that the remote user equipment performs this step, if no radio link failure occurs in at least one direct path or indirect path in an SCG, the remote user equipment may transmit, to the network device, the third indication information indicating the MCG radio link failure through any direct path or indirect path where no radio link failure occurs.

Optionally, the third indication information may also carry identification information of the MCG.

Step 45: the remote user equipment performs RRC connection reestablishment.

The remote user equipment performs discovery and/or reselection of a target object, and the target object may be a relay user equipment and/or a cell. After the target object is selected, the RRC connection reestablishment may be performed through the target object.

Specific application scenario 3: a radio link failure occurs in an SCG

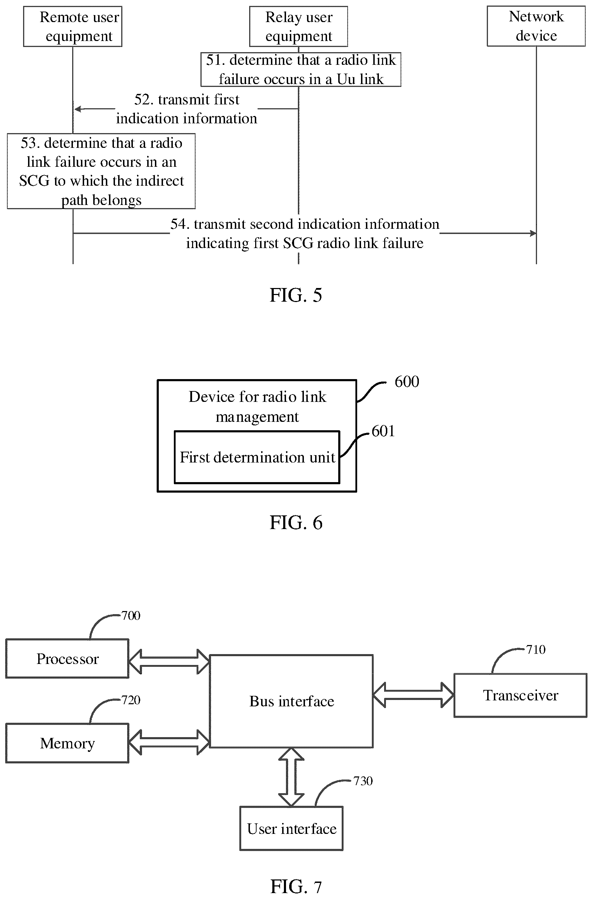

For the specific implementation process, reference may be made to FIG. 5.

Step 51: the relay user equipment determines that a radio link failure occurs in a Uu link.

The criteria for the relay user equipment to determine the radio link failure of the Uu link is as follows. As long as any of the following conditions is met, it is determined that a radio link failure occurs in the Uu interface between the relay user equipment and the network device:
F11, PCell T310 timeout occurs;
F12, PCell T312 timeout occurs;
F13. in a case that T300, T301, T304, T311 and T319 are not running, a MAC entity of the MCG indicates a random access problem to the RRC; or,
F14, an RLC layer of the MCG reaches the maximum quantity of retransmissions.

Step 52: the relay user equipment transmits first indication information to the remote user equipment, to indicate that a radio link failure occurs in its Uu link.

For example, when the radio link failure occurs in the Uu link of the relay user equipment, the first indication information transmitted to the remote user equipment needs to be indicated to the remote user equipment via signaling (such as PC5-RRC signaling).

Step 53: the remote user equipment determines that a radio link failure occurs in an SCG to which the indirect path belongs.

For the remote user equipment supporting multi-path transmission, when a radio link failure occurs in a specific link on an indirect path, the remote user equipment determines that a radio link failure occurs to it in the indirect path.

For this application scenario, the specific link refers to a Uu link between the U2N relay UE and the network device.

Further, in a case that the cell group to which the indirect path belongs is a first SCG, it is determined that a radio link failure occurs in the SCG to which the indirect path belongs.

Step 54: the remote user equipment transmits second indication information indicating first SCG radio link failure to the network device.

Optionally, in a case that no radio link failure occurs in at least one direct path or indirect path in an MCG or other SCG, the remote user equipment may transmit, to the network device, second indication information indicating first SCG radio link failure through any direct path or indirect path where no radio link failure occurs.

Optionally, the second indication information may also carry identification information of the first SCG.

Optionally, the network device receives the second indication information from the remote user equipment, and specific operation depends on the implementation on the network device side. For example, the network device may transmit fourth indication information to the remote user equipment to trigger the remote user equipment to perform discovery and/or reselection of a target object, where the target object may be a relay user equipment and/or a cell.

It should be noted that, based on at least one embodiment of the present application, a method for managing a radio link of an indirect path in a multi-path transmission scenario is provided. Based on the embodiments of the present application, the remote user equipment can accurately determine the radio link failure of the indirect path, which can avoid initiating unnecessary RRC connection reestablishment by the user equipment, and reduce service interruption time.

The technical solutions in the embodiments of the present application may be applied to various systems, especially 5G systems. For example, the applicable system may be a global system of mobile communication (Global System of Mobile Communication, GSM) system, a code division multiple access (Code Division Multiple Access, CDMA) system, a wideband code division multiple access (Wideband Code Division Multiple Access, WCDMA) system, a general packet radio service (general packet radio service, GPRS) system, a long term evolution (Long Term Evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, a 5G new radio (New Radio, NR) system, etc. These systems each include a terminal and a network device. The system may also include a core network part, such as an evolved packet system (Evolved Packet System, EPS), a 5G system (5GS), etc.

The terminal involved in the embodiments of the present application may refers to a device that provides voice and/or data connectivity to a user, a handheld device with a wireless connection function, or other processing devices connected to a wireless modem. In different systems, the name of the terminal may be different. For example, in 5G systems, the terminal may be referred to as a user equipment (User Equipment, UE). A wireless terminal may communicate with one or more core networks (Core Network, CN) through a radio access network (Radio Access Network, RAN). The wireless terminal may be a mobile terminal, such as a mobile phone (or referred to as a "cellular" phone) or a computer with a mobile terminal, for example, it may be a portable, pocket type, handheld, computer built-in, or vehicle mounted mobile device, which exchanges languages and/or data with a radio access network. For example, it may be a personal communication service (Personal Communication Service, PCS) phone, a cordless phone, a session initiated protocol (Session Initiated Protocol, SIP) phone, a wireless local loop (Wireless Local Loop, WLL) station, a personal digital assistant (Personal Digital Assistant, PDA), or other devices. Or the wireless terminal may be referred to as a system, a subscriber unit (subscriber unit), a subscriber station (subscriber station), a mobile station (mobile station), a mobile (mobile), a remote station (remote station), an access point (access point), a remote terminal (remote terminal), an access terminal (access terminal), a user terminal (user terminal), a user agent (user agent), or a user device (user device),which is not limited in the embodiments of the present application.

The network device involved in the embodiments of the present application may be a base station, and the base station may have multiple cells providing services for terminals. According to different application scenarios, the base station may also be referred to as an access point, or may be a device in an access network that communicates with wireless terminals through one or more sectors on air interfaces, or may have other names. The network device may be configured to exchange received air frames and Internet protocol (Internet Protocol, IP) packets, serving as a router between the wireless terminals and rest of the access network, where the rest of the access network may include an Internet Protocol (IP) communication network. The network device may also coordinate attribute management of air interfaces. For example, the network device involved in the embodiments of the present application may be a network device(Base Transceiver Station, BTS) in a global system for mobile communications (Global System for Mobile Communications, GSM) or a code division multiple access (Code Division Multiple Access, CDMA), or may be a network device (NodeB) in wide-band code division multiple access (Wide-band Code Division Multiple Access, WCDMA), or may be an evolutional network device (evolutional Node B, eNB or e-NodeB) in a long term evolution (Long Term Evolution, LTE) system or a 5G base station (gNB) in a 5G network architecture (next generation system), or may be a home evolved node B (Home evolved Node B, HeNB),a relay user equipment node (relay node), a femto (femto), a pico (pico), etc., which is not limited in the embodiments of the present application. In some network structures, the network device may include a centralized unit (centralized unit, CU) node and a distributed unit (distributed unit, DU) node, and the centralized unit and the distributed unit may be geographically separated.

The network device and the terminal may each use one or more antennas to perform multi input multi output (Multi Input Multi Output, MIMO) transmission, where the MIMO transmission may be single user MIMO (Single User MIMO, SU-MIMO) or multiple user MIMO (Multiple User MIMO, MU-MIMO). According to the form and the quantity of the antenna combination, the MIMO transmission may be 2-dimension MIMO (2D-MIMO), 3-dimension MIMO (3D-MIMO), full dimension MIMO (FD-MIMO), or massive MIMO (massive-MIMO), or may be diversity transmission, or precoding transmission, or beamforming transmission, etc.

As shown in FIG. 6, the embodiments of the present disclosure provide a device 600 for radio link management, which is applied to a user equipment, including:
a first determination unit 601, configured to: in a case that a radio link failure occurs in a first link on a first indirect path of the user equipment, determine that a radio link failure occurs to the user equipment in the first indirect path.

The first link includes at least one of the following:
a Uu link between a first relay user equipment and a network device;
a sidelink between a remote user equipment and the first relay user equipment;
a sidelink between the remote user equipment and a second relay user equipment;
a sidelink between two second relay user equipments; or,
a sidelink between the second relay user equipment and the first relay user equipment.

The first relay user equipment is a UE-to-network relay user equipment, and the second relay user equipment is a UE-to-UE relay user equipment.

Optionally, in a case that the first link includes at least one of: the Uu link between the first relay user equipment and the network device, the sidelink between the two second relay user equipments, or the sidelink between the second relay user equipment and the first relay user equipment, before the first determination unit 601 determines that the radio link failure occurs to the user equipment in the first indirect path, the device further includes:
a first reception unit, configured to receive first indication information transmitted by a relay user equipment, where the first indication information is used to indicate that the radio link failure occurs in the first link.

Optionally, after the first determination unit 601 determines that the radio link failure occurs to the user equipment in the first indirect path, the device further includes at least one of the following:
a second determination unit, configured to: in a case that radio link failures occur in all first paths in a first cell group to which the first indirect path belongs, determine that a radio link failure occurs to the user equipment in the first cell group, where the first paths includes at least one of a direct path or second indirect paths, and the first indirect path is one of the second indirect paths; or,
a first transmission unit, configured to: in a case that no radio link failure occurs in at least one second path in a second cell group aggregated by the user equipment, transmit indirect path radio link failure indication information to the network device through the second path where no radio link failure occurs, where the second path includes a direct path or a third indirect path, and the second cell group is any cell group among all cell groups aggregated by the user equipment.

Optionally, the indirect path radio link failure indication information carries identification information of the first indirect path.

Optionally, the identification information includes at least one of following:
path identification information of the first indirect path;
an identifier of a cell to which the first indirect path belongs and path identification information in the cell; or,
an identifier of a cell to which the first indirect path belongs, an identifier of a relay user equipment and an identifier of the user equipment.

Optionally, after the first determination unit 601 determines that the radio link failure occurs to the user equipment in the first cell group, the device further includes at least one of the following:
a second transmission unit, configured to: in a case that the first cell group to which the first indirect path belongs is a first secondary cell group and no radio link failure occurs in at least one third path in a second cell group, transmit, to the network device through the third path where no radio link failure occurs, second indication information indicating a first secondary cell group radio link failure, where the second cell group includes: at least one of a master cell group or other secondary cell group except the first secondary cell group, and the third path includes a direct path or a fourth indirect path; or,
a third transmission unit, configured to: in a case that the first cell group to which the indirect path belongs is a master cell group and no radio link failure occurs in at least one fourth path in a secondary cell group, transmit, to the network device through the fourth path where no radio link failure occurs, third indication information indicating a master cell group radio link failure, where the fourth path includes a direct path or a fifth indirect path.

Optionally, the second indication information carries identification information of the first secondary cell group.

Optionally, the device further includes:
a second reception unit, configured to receive fourth indication information transmitted by the network device, where the fourth indication information is used to trigger the user equipment to perform discovery and/or reselection of a target object;
where the target object includes: a relay user equipment and/or a cell.

Optionally, after the first determination unit 601 determines that the radio link failure occurs to the user equipment in the first indirect path, the device further includes:
an execution unit, configured to perform discovery and/or reselection of a target object;
where the target object includes: a relay user equipment and/or a cell.

It should be noted that the device embodiments are in a one-to-one correspondence with the above method embodiments, all the implementations in the above method embodiments are applicable to the device embodiments, and the same technical effects can be achieved.

It should be noted that the division of units in the embodiments of the present application is schematic and only serves as a division of logical functions, and there may be other division methods. In addition, in the embodiments of the present application, various functional units may be integrated into a single processing unit, or the various units may be physically separated, or two or more units may be integrated into one unit. The integrated unit in the above may be implemented in the form of hardware or may be implemented in the form of software functional units.

If the integrated unit is implemented in the form of software functional units and sold or used as an independent product, it may be stored in a processor readable storage medium. Based on this understanding, essence of the technical solutions of the present application, or the part contributing to the related technologies, or part or all of the technical solutions, may be embodied in the form of a software product. The computer software product is stored in a storage medium, and includes a number of instructions to enable a computer device (which may be a personal computer, a server, or a network device, etc.) or a processor (processor) to perform all or part of the steps of method described in the various embodiments of the present application. The storage medium includes a USB flash disk, a mobile hard disk, a read-only memory (Read-Only Memory, ROM), a random access memory (Random Access Memory, RAM), a magnetic disk, an optical disk, or other medium which can store program code.

As shown in FIG. 7, the embodiments of the present disclosure further provide a user equipment, including a processor 700, a transceiver 710, a memory 720, and a program stored in the memory 720 and executable by the processor 700. The transceiver 710 is connected to the processor 700 and the memory 720 through a bus interface, and the processor 700 is configured to read the program in the memory to perform the following process:
in a case that a radio link failure occurs in a first link on a first indirect path of the user equipment, determining that a radio link failure occurs to the user equipment in the first indirect path.

The first link includes at least one of the following:
a Uu link between a first relay user equipment and a network device;
a sidelink between a remote user equipment and the first relay user equipment;
a sidelink between the remote user equipment and a second relay user equipment;
a sidelink between two second relay user equipments; or,
a sidelink between the second relay user equipment and the first relay user equipment.

The first relay user equipment is a UE-to-network relay user equipment, and the second relay user equipment is a UE-to-UE relay user equipment.

The transceiver 710 is configured to receive and transmit data under control of the processor 700.

In FIG. 7, a bus architecture may include any quantity of interconnected buses and bridges. Various circuits including one or more processors represented by the processor 700 and a memory represented by the memory 720 are linked. The bus architecture may further link various other circuits together, such as a periphery component, a voltage stabilizer and a power management circuit, which are known in the art and are not further described herein. A bus interface provides an interface. The transceiver 710 may be multiple elements, i.e., including a transmitter and a receiver, providing a unit for communicating with various other devices on transmission media. The transmission media include a wireless channel, a wired channel, an optical cable, or other transmission media. For different user equipments, the user interface 730 may be an interface capable of connecting externally and internally with the required equipment. The connected equipment includes but not limited to a keypad, a display, a speaker, a microphone, a joystick, etc.

The processor 700 is in charge of managing the bus architecture and common processes. The memory 720 may store data used by the processor 400 in performing operations.

Optionally, the processor 700 may be a CPU (Central Processing Device), an ASIC (Application Specific Integrated Circuit), a FPGA (Field Programmable Gate Array), or a CPLD (Complex Programmable Logic Device), or the processor may adopt a multi-core architecture.

The processor is configured to execute any of the methods in the embodiments of the present application according to obtained executable instructions by calling the computer program stored in the memory. The processor and the memory may be physically arranged separately.

Further, in a case that the first link includes at least one of: the Uu link between the first relay user equipment and the network device, the sidelink between the two second relay user equipments, or the sidelink between the second relay user equipment and the first relay user equipment, the processor is configured to read the computer program in the memory to further perform following operation:

receiving, via the transceiver, first indication information transmitted by a relay user equipment, where the first indication information is used to indicate that the radio link failure occurs in the first link.

Further, the processor is configured to read the computer program in the memory to further perform at least one of following operations:
in a case that radio link failures occur in all first paths in a first cell group to which the first indirect path belongs, determining that a radio link failure occurs to the user equipment in the first cell group, where the first paths includes at least one of a direct path or second indirect paths, and the first indirect path is one of the second indirect paths; or,
in a case that no radio link failure occurs in at least one second path in a second cell group aggregated by the user equipment, transmitting indirect path radio link failure indication information to the network device through the second path where no radio link failure occurs, where the second path includes a direct path or a third indirect path, and the second cell group is any cell group among all cell groups aggregated by the user equipment.

Further, the indirect path radio link failure indication information carries identification information of the first indirect path.

Further, the identification information includes at least one of following:
path identification information of the first indirect path;
an identifier of a cell to which the first indirect path belongs and path identification information in the cell; or,
an identifier of a cell to which the first indirect path belongs, an identifier of a relay user equipment and an identifier of the user equipment.

Further, the processor is configured to read the computer program in the memory to further perform at least one of following operations:
in a case that the first cell group to which the first indirect path belongs is a first secondary cell group and no radio link failure occurs in at least one third path in a second cell group, transmitting, to the network device through the third path where no radio link failure occurs, second indication information indicating a first secondary cell group radio link failure, where the second cell group includes: at least one of a master cell group or other secondary cell group except the first secondary cell group, and the third path includes a direct path or a fourth indirect path; or,
in a case that the first cell group to which the indirect path belongs is a master cell group and no radio link failure occurs in at least one fourth path in a secondary cell group, transmitting, to the network device through the fourth path where no radio link failure occurs, third indication information indicating a master cell group radio link failure, where the fourth path includes a direct path or a fifth indirect path.

Further, the second indication information carries identification information of the first secondary cell group.

Further, the processor is configured to read the computer program in the memory to further perform following operation:
receiving, via the transceiver, fourth indication information transmitted by the network device, where the fourth indication information is used to trigger the user equipment to perform discovery and/or reselection of a target object;
where the target object includes: a relay user equipment and/or a cell.

Further, the processor is configured to read the computer program in the memory to further perform following operation:
performing discovery and/or reselection of a target object;
where the target object includes: a relay user equipment and/or a cell.

It should be noted that the user equipment according to the embodiments of the present disclosure can realize all the method steps in the method embodiments, and the same technical effects can be realized. The same parts of the present embodiments as the method embodiments, and the beneficial effects, are not repeated herein.

The embodiments of the present disclosure further provide a computer readable storage medium having a computer program stored thereon, and the computer program, when being executed by a processor, performs the steps of the method for radio link management applied to the user equipment. The readable storage medium may be any available medium or data storage device that the processor may access, including but not limited to a magnetic memory (such as a floppy disk, a hard disk, a magnetic tape, a magneto-optical disk (magneto-optical, MO), etc.), an optical memory (such as a compact disk (CD), a digital video disc (DVD), a Blu-ray disc (BD), a high-definition versatile disc (HVD), etc.), or a semiconductor memory (such as a ROM, an erasable programmable read-only memory (EPROM), an electrically erasable programmable read-only memory (EEPROM), a non-volatile memory (NAND FLASH), a solid state disk (SSD)).

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, the determination module may be a separate processing element, or may be integrated into a certain chip of the above device, or, may be stored in the memory of the above device in the form of program code, and a certain processing element of the above device may call and execute the functions of the determination module. Other modules have similar implementations. In addition, all or part of these modules may be integrated together, and may be implemented independently. The processing element mentioned herein may be an integrated circuit with signal processing capability. In the implementation process, the various steps of the above method or the above various modules may be implemented by an integrated logic circuit in hardware form in elements of a processor or implemented by instructions in the form of software.

For example, the various modules, units, subunits or submodules may be one or more integrated circuits configured to implement the above methods, such as one or more application specific integrated circuits (Application Specific Integrated Circuit, ASIC), or one or more microprocessors (Digital Signal Processor, DSP), or one or more field programmable gate arrays (Field Programmable Gate Array, FPGA), etc. As another example, when a module described above is implemented in the form of scheduling program codes by a processing element, the processing element may be a general purpose processor, such as a central processing unit (Central Processing Unit, CPU) or other processors that may call program codes. As another example, these modules may be integrated together and implemented as a system-on-a-chip (system-on-a-chip, SOC).

Terms such as "first" and "second" in the specification and the claims of the present disclosure are used to distinguish similar objects and are not necessarily used to describe a specific order or sequence. It should be understood that the terms used in this way may be interchanged under appropriate circumstances, so that the embodiments of the present disclosure described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device. Moreover, the term "and/or" used in the specification and the claims indicates involving at least one of connected objects, for example, A and/or B and/or C means 7 situations, including: A alone, B alone, C alone, both A and B, both B and C, both A and C, and all of A, B and C. Similarly, the use of "at least one of A and B" in this specification and claims should be understood as "A alone, B alone, or both A and B".

A person skilled in the art should understand that the embodiments of the present disclosure may be provided as methods, systems, or computer program products. Therefore, the present disclosure may adopt the form of complete hardware embodiments, complete software embodiments, or embodiments combining software and hardware aspects. Moreover, the present disclosure may adopt the form of a computer program product implemented on one or more computer available storage media (including but not limited to a disk storage, an optical storage, etc.) containing computer available program code.

The present disclosure is described with reference to flowcharts and/or block diagrams of methods, devices (systems), and computer program products according to the embodiments of the present disclosure. It should be understood that each process and/or block in the flowchart and/or block diagram, and the combination of processes and/or blocks in the flowchart and/or block diagram may be implemented by computer executable instructions. These computer executable instructions may be provided to a general-purpose computer, a special-purpose computer, an embedded processor, or a processor of other programmable data processing device to generate a machine, so that a device, which is configured to implement functions specified in one process or multiple processes in the flowchart and/or one block or multiple blocks in the block diagram, is generated through the instructions executed by the computer or the processor of other programmable data processing device.

These processor executable instructions may be stored in a processor readable memory that may guide a computer or other programmable data processing device to operate in a specific manner, so that the instructions stored in the processor readable memory generate a product including an instruction device. The instruction device implements the functions specified in one process or multiple processes in the flowchart and/or one block or multiple blocks in the block diagram.

These processor executable instructions may be loaded in a computer or other programmable data processing device, to enable a series of operation steps to be executed on the computer or other programmable equipment to realize computer-implemented processing, so that the instructions executed on the computer or other programmable device provide steps for implementing functions specified in a process or multiple processes in the flowchart and/or a block or multiple blocks in the block diagram.

Apparently, those skilled in the art may make various modifications and variations to the present disclosure, without departing from the spirit and scope of the present disclosure. In this case, if the modifications and variations of the present disclosure fall within the scope of the claims of the present disclosure and their equivalent techniques, the present disclosure is intended to include these modifications and variations.

## Claims

1. A method for radio link management, performed by a user equipment, comprising:
in a case that a radio link failure occurs in a first link on a first indirect path of the user equipment, determining that a radio link failure occurs to the user equipment in the first indirect path;
wherein the first link comprises at least one of following:
a Uu link between a first relay user equipment and a network device;
a sidelink between a remote user equipment and the first relay user equipment;
a sidelink between the remote user equipment and a second relay user equipment;
a sidelink between two second relay user equipments; or,
a sidelink between the second relay user equipment and the first relay user equipment;
wherein the first relay user equipment is a UE-to-network relay user equipment, and the second relay user equipment is a UE-to-UE relay user equipment.

2. The method according to claim 1, wherein in a case that the first link comprises at least one of: the Uu link between the first relay user equipment and the network device, the sidelink between the two second relay user equipments, or the sidelink between the second relay user equipment and the first relay user equipment, before the determining that the radio link failure occurs to the user equipment in the first indirect path, the method further comprises:
receiving first indication information transmitted by a relay user equipment, wherein the first indication information is used to indicate that the radio link failure occurs in the first link.

3. The method according to claim 1, wherein after the determining that the radio link failure occurs to the user equipment in the first indirect path, the method further comprises at least one of following:
in a case that radio link failures occur in all first paths in a first cell group to which the first indirect path belongs, determining that a radio link failure occurs to the user equipment in the first cell group, wherein the first paths comprises at least one of a direct path or second indirect paths, and the first indirect path is one of the second indirect paths; or,
in a case that no radio link failure occurs in at least one second path in a second cell group aggregated by the user equipment, transmitting indirect path radio link failure indication information to the network device through the second path where no radio link failure occurs, wherein the second path comprises a direct path or a third indirect path, and the second cell group is any cell group among all cell groups aggregated by the user equipment.

4. The method according to claim 3, wherein the indirect path radio link failure indication information carries identification information of the first indirect path.

5. The method according to claim 4, wherein the identification information comprises at least one of following:
path identification information of the first indirect path;
an identifier of a cell to which the first indirect path belongs and path identification information in the cell; or,
an identifier of a cell to which the first indirect path belongs, an identifier of a relay user equipment and an identifier of the user equipment.

6. The method according to claim 3, wherein after the determining that the radio link failure occurs to the user equipment in the first cell group, the method further comprises at least one of following:
in a case that the first cell group to which the first indirect path belongs is a first secondary cell group and no radio link failure occurs in at least one third path in a second cell group, transmitting, to the network device through the third path where no radio link failure occurs, second indication information indicating a first secondary cell group radio link failure, wherein the second cell group comprises: at least one of a master cell group or other secondary cell group except the first secondary cell group, and the third path comprises a direct path or a fourth indirect path; or,
in a case that the first cell group to which the indirect path belongs is a master cell group and no radio link failure occurs in at least one fourth path in a secondary cell group, transmitting, to the network device through the fourth path where no radio link failure occurs, third indication information indicating a master cell group radio link failure, wherein the fourth path comprises a direct path or a fifth indirect path.

7. The method according to claim 6, wherein the second indication information carries identification information of the first secondary cell group.

8. The method according to claim 3 or claim 6, further comprising:
receiving fourth indication information transmitted by the network device, wherein the fourth indication information is used to trigger the user equipment to perform discovery and/or reselection of a target object;
wherein the target object comprises: a relay user equipment and/or a cell.

9. The method according to claim 1, wherein after the determining that the radio link failure occurs to the user equipment in the first indirect path, the method further comprises:
performing discovery and/or reselection of a target object;
wherein the target object comprises: a relay user equipment and/or a cell.

10. A user equipment, comprising a memory, a transceiver, and a processor;
wherein the memory is configured to store a computer program, the transceiver is configured to transmit and receive data under control of the processor, and the processor is configured to read the computer program in the memory to perform following operation:
in a case that a radio link failure occurs in a first link on a first indirect path of the user equipment, determining that a radio link failure occurs to the user equipment in the first indirect path;
wherein the first link comprises at least one of following:
a Uu link between a first relay user equipment and a network device;
a sidelink between a remote user equipment and the first relay user equipment;
a sidelink between the remote user equipment and a second relay user equipment;
a sidelink between two second relay user equipments; or,
a sidelink between the second relay user equipment and the first relay user equipment;
wherein the first relay user equipment is a UE-to-network relay user equipment, and the second relay user equipment is a UE-to-UE relay user equipment.

11. The user equipment according to claim 10, wherein in a case that the first link comprises at least one of: the Uu link between the first relay user equipment and the network device, the sidelink between the two second relay user equipments, or the sidelink between the second relay user equipment and the first relay user equipment, the processor is configured to read the computer program in the memory to further perform following operation:
receiving, via the transceiver, first indication information transmitted by a relay user equipment, wherein the first indication information is used to indicate that the radio link failure occurs in the first link.

12. The user equipment according to claim 10, wherein the processor is configured to read the computer program in the memory to further perform at least one of following operations:
in a case that radio link failures occur in all first paths in a first cell group to which the first indirect path belongs, determining that a radio link failure occurs to the user equipment in the first cell group, wherein the first paths comprises at least one of a direct path or second indirect paths, and the first indirect path is one of the second indirect paths; or,
in a case that no radio link failure occurs in at least one second path in a second cell group aggregated by the user equipment, transmitting indirect path radio link failure indication information to the network device through the second path where no radio link failure occurs, wherein the second path comprises a direct path or a third indirect path, and the second cell group is any cell group among all cell groups aggregated by the user equipment.

13. The user equipment according to claim 12, wherein the indirect path radio link failure indication information carries identification information of the first indirect path.

14. The user equipment according to claim 13, wherein the identification information comprises at least one of following:
path identification information of the first indirect path;
an identifier of a cell to which the first indirect path belongs and path identification information in the cell; or,
an identifier of a cell to which the first indirect path belongs, an identifier of a relay user equipment and an identifier of the user equipment.

15. The user equipment according to claim 13, wherein the processor is configured to read the computer program in the memory to further perform at least one of following operations:
in a case that the first cell group to which the first indirect path belongs is a first secondary cell group and no radio link failure occurs in at least one third path in a second cell group, transmitting, to the network device through the third path where no radio link failure occurs, second indication information indicating a first secondary cell group radio link failure, wherein the second cell group comprises: at least one of a master cell group or other secondary cell group except the first secondary cell group, and the third path comprises a direct path or a fourth indirect path; or,
in a case that the first cell group to which the indirect path belongs is a master cell group and no radio link failure occurs in at least one fourth path in a secondary cell group, transmitting, to the network device through the fourth path where no radio link failure occurs, third indication information indicating a master cell group radio link failure, wherein the fourth path comprises a direct path or a fifth indirect path.

16. The user equipment according to claim 15, wherein the second indication information carries identification information of the first secondary cell group.

17. The user equipment according to claim 12 or claim 15, wherein the processor is configured to read the computer program in the memory to further perform following operation:
receiving, via the transceiver, fourth indication information transmitted by the network device, wherein the fourth indication information is used to trigger the user equipment to perform discovery and/or reselection of a target object;
wherein the target object comprises: a relay user equipment and/or a cell.

18. The user equipment according to claim 10, wherein the processor is configured to read the computer program in the memory to further perform following operation:
performing discovery and/or reselection of a target object;
wherein the target object comprises: a relay user equipment and/or a cell.

19. A device for radio link management, applied to a user equipment, comprising:
a first determination unit, configured to: in a case that a radio link failure occurs in a first link on a first indirect path of the user equipment, determine that a radio link failure occurs to the user equipment in the first indirect path;
wherein the first link comprises at least one of following:
a Uu link between a first relay user equipment and a network device;
a sidelink between a remote user equipment and the first relay user equipment;
a sidelink between the remote user equipment and a second relay user equipment;
a sidelink between two second relay user equipments; or,
a sidelink between the second relay user equipment and the first relay user equipment;
wherein the first relay user equipment is a UE-to-network relay user equipment, and the second relay user equipment is a UE-to-UE relay user equipment.

20. The device according to claim 19, further comprising:
a first reception unit, configured to receive first indication information transmitted by a relay user equipment, wherein the first indication information is used to indicate that the radio link failure occurs in the first link.

21. The device according to claim 19, further comprising at least one of following:
a second determination unit, configured to: in a case that radio link failures occur in all first paths in a first cell group to which the first indirect path belongs, determine that a radio link failure occurs to the user equipment in the first cell group, wherein the first paths comprises at least one of a direct path or second indirect paths, and the first indirect path is one of the second indirect paths; or,
a first transmission unit, configured to: in a case that no radio link failure occurs in at least one second path in a second cell group aggregated by the user equipment, transmit indirect path radio link failure indication information to the network device through the second path where no radio link failure occurs, wherein the second path comprises a direct path or a third indirect path, and the second cell group is any cell group among all cell groups aggregated by the user equipment.

22. The device according to claim 21, wherein the indirect path radio link failure indication information carries identification information of the first indirect path.

23. The device according to claim 22, wherein the identification information comprises at least one of following:
path identification information of the first indirect path;
an identifier of a cell to which the first indirect path belongs and path identification information in the cell; or,
an identifier of a cell to which the first indirect path belongs, an identifier of a relay user equipment and an identifier of the user equipment.

24. The device according to claim 21, further comprising at least one of following:
a second transmission unit, configured to: in a case that the first cell group to which the first indirect path belongs is a first secondary cell group and no radio link failure occurs in at least one third path in a second cell group, transmit, to the network device through the third path where no radio link failure occurs, second indication information indicating a first secondary cell group radio link failure, wherein the second cell group comprises: at least one of a master cell group or other secondary cell group except the first secondary cell group, and the third path comprises a direct path or a fourth indirect path; or,
a third transmission unit, configured to: in a case that the first cell group to which the indirect path belongs is a master cell group and no radio link failure occurs in at least one fourth path in a secondary cell group, transmit, to the network device through the fourth path where no radio link failure occurs, third indication information indicating a master cell group radio link failure, wherein the fourth path comprises a direct path or a fifth indirect path.

25. The device according to claim 24, wherein the second indication information carries identification information of the first secondary cell group.

26. The device according to claim 21 or claim 24, further comprising:
a second reception unit, configured to receive fourth indication information transmitted by the network device, wherein the fourth indication information is used to trigger the user equipment to perform discovery and/or reselection of a target object;
wherein the target object comprises: a relay user equipment and/or a cell.

27. The device according to claim 19, further comprising:
an execution unit, configured to perform discovery and/or reselection of a target object;
wherein the target object comprises: a relay user equipment and/or a cell.

28. A processor readable storage medium, having a computer program stored thereon, wherein the computer program is configured to cause a processor to perform the method according to any one of claims 1 to 9.
